# EUROPEAN PATENT APPLICATION

(11) **EP 1 852 819 A1**
(43) Date of publication of application: **07.11.2007**
(21) Application number: 07106578.3
(22) Date of filing: 20.04.2007
(51) Int. Cl.: G06Q 30/00

(54) **System and method for ordering and producing paper product with third party graphics printed thereon**

(30) Priority: 20.04.2006 US 409550; 16.04.2007 US 787344
(71) Applicant: Kabushiki Kaisha Isowa, Kita-ku Nagoya-shi, Aichi-ken (JP)
(72) Inventor: Isowa, Hideyuki, 66, Nishiya-cho Kasugai-shi Aichi (JP)
(74) Representative: Santarelli

(57) **Abstract**

A system and method for use in ordering and/or producing a printed sheet for forming a box, container or component thereof having free space thereon for third party advertising are disclosed. A first party or producer of the sheet, or box made therefrom, maintains a computer readable data base of second party orders for boxes having printable areas thereon, where one or more of the areas are free areas or space available for third party advertising printed matter. The third party may specify requirements for free space, including characteristics of the free space, box characteristics, and time period of availability of the box. The first party may accept orders for the free space on second party box orders, and receives the images from the third party and has the images printed on a printed sheet using an ink jet printer.

## Description

### TECHNICAL FIELD

This application relates to a system and method for use in ordering and/or producing printed sheets for fabricating products such as boxes or components thereof, and more specifically products where a printed image is specified by a third party.

### BACKGROUND OF THE INVENTION

Public display advertising is used in the marketing and sale of many products to users. Such advertising may be displayed in billboards, placards mounted to the outside or inside of public busses, trains and the like, as well as posters affixed to walls, and the like. The geographic scope of coverage of such advertising means is ordinarily limited to the direct line of sight between the potential customer and the printed display medium. At best, trains and busses cover a local geographic area. Such advertising does not provide selectivity of the audience to which it is directed, and except geographically, does not address customers who are known consumers of related products, and the number of viewings of each advertisement is not easily quantified.

A method or system for use in ordering and/or producing specifically targeted printed advertising which may be available for public viewing is needed. Such advertising may be printed on sheets which may be displayed flat or folded and assembled to form a box.

Corrugated cardboard sheets or similar paper sheets for forming into packaging or shipping boxes and containers may be printed by ink jet technology, as disclosed in applicant's European patent applications EP 1 731 318 and EP 1 733 890. Presently, two different technologies may be used for ink jet printing. One technology uses a thermal type print head in which a bubble is formed inside nozzles in the print head and the ink droplets are ejected toward the surface to be printed, and a second technology uses a piezoelectric type print head in which the ink droplets are produced in response to vibrations of the ink orifices.

Where ink jet technology is used for printing a surface, such as the surface of a corrugated cardboard sheet used to form a box, the sheet width may be wide, for example, about 1500mm. The ink jet printer for such widths may have a plurality of ink jet print heads, each ink jet print head having a plurality of ink jet nozzles oriented in a linear fashion. Such ink jet heads may have several rows of nozzles, each associated with a specific color, such as the ink colors yellow (Y), magenta (M), cyan (C), and black (K) as are used in printing.

The ink jet print heads are disposed in a transverse or widthwise direction so as to span the entire width or transverse dimension of the surface to be printed. The ink jet print heads may be controlled by one or more process computers or controllers so as to eject the ink droplets at a time, with a color, and in a pattern to produce a desired image. The ink jet heads are fixed in position and the surface to be printed is advanced at a predetermined feed or feeding rate so that the ink droplets impinge on the surface to form dots and thus create the desired printed image.

The image data to be printed by the ink jet printer is provided to the printer controller in digital format. Thus, multiple images may be transmitted for printing on various portions of the sheet corresponding to faces of a box. The images may be rapidly replaced by new images to change the printed surface. As such, printing may be adapted to customer requirements by changing the image data supplied to the process controller.

US2001/0010132 discloses a package for storing a baked product, such as a pizza, formed as a box with a cover and made from double-faced corrugated cardboard. Third party advertising print is produced by conventional rotary printing or offset printing on the liner paper prior to gluing to the corrugated core. The advertising is printed preferably on the cover or the entire outer surface of the box.

US2002/0004732 discloses the packaging of a ream of sheet paper or a roll of paper where a paper wrapper is printed with third party promotional or advertising material along with an identifying label in a particular case. A system is disclosed including an order tracker for receiving a promotional material order from a third party advertiser to place promotional material on the paper wrappers.

US2003/0105665 discloses a sleeve or an over-package bearing third party advertising to receive a cigarette package. A system is disclosed including a communications network comprising an advertising center coupled to a communications network, the advertising center being adapted to receive instructions regarding advertising material from an advertiser and means for printing advertising material on display panels of an advertising article.

None of these documents discloses systems or methods for the coordinated production of printed sheets ordered by a second party and incorporating third party advertising requirements.

An object of the invention is to provide methods and systems for the coordinated production of printed sheets ordered by a second party and incorporating third party advertising requirements.

### SUMMARY OF THE INVENTION

According to one aspect of the invention there is a system for producing a printed sheet, such as a printed sheet for forming a box or container or component thereof, comprising: a computer configured to access a first data base of second party orders for second party specified print areas on the sheet and also including a free area on the sheet specified in the second party orders, the first data base being stored on a computer readable medium, wherein the computer has a communications interface for receiving third-party-specified requirements for third party advertising on the free areas of the sheet, and the first data base is searchable to determine the specific second party orders meeting the third-party-specified requirements

According to another aspect of the invention there is provided a method for use in printing on a sheet, such as a sheet configured for forming a box or container or component thereof, the method comprising: providing a first data base of print orders from a second party including data relative to print areas for accommodating the print orders from the second party and available free areas for third party advertising print orders; searching the first data base using characteristic criteria supplied by a third party over a communications interface; transmitting search results for printing orders in the first data base meeting supplied characteristic criteria; transmitting the acceptance of a third party order for printing on a selected free area of the sheet meeting supplied characteristic data for one or more of the second party orders in the first data base; and programming the printing of the second party and/or third party print orders on the sheet.

According to another aspect of the invention there is provided a method for use in placing an order for printing on a free area of a sheet, the method including: requesting data regarding available free areas of sheets being produced for another party; receiving data regarding available free areas of sheets being produced for another party through a communications interface; and selecting one or more of the available free areas; and placing an order for printing of the selected free area.

### BRIEF DESCRIPTION OF THE DRAWINGS

Figure 1 is a block diagram of the system, showing first party equipment including a printing apparatus, a third party ordering station and a second party ordering station and a network connection;
Figure 2 shows a representative image of a sheet for forming a box and having a free area indicated thereon;
Figure 3 shows a format for a computer monitor screen which may be used to display third party free space and other requirements;
Figure 4 shows a format for a computer monitor screen which may be used to display the results of a search made using the criteria shown in Figure 3;
Figure 5 shows a format for a computer monitor screen which may be used as a log-in and a validating step in an ordering process;
Figure 6A shows images and data which may be displayed to a third party for a regular slotted box or container and Figure 6B shows images and data displayed to a third party for a telescoping or two-part box or container;
Figure 7 shows the data and material flows in a first mode or method for use in producing printed sheets including ordering free area advertising using the system of Figure 1;
Figure 8 shows the data and material flows in a second mode or method for use in producing printed sheets including ordering free area advertising using the system of Figure 1;
Figure 9 shows the data and material flows in a third mode or method for use in producing printed sheets including ordering free area advertising using the system of Figure 1;
Figure 10 shows the data and material flows in a fourth mode or method for use in producing printed sheets including ordering free area advertising using the system of Figure 1;
Figure 11 shows the data and material flows in a fifth mode or method for use in producing printed sheets including ordering free area advertising using the system of Figure 1;
Figure 12 shows the data and material flows in a sixth mode or method for use in producing printed sheets including ordering free area advertising using the system of Figure 1;
Figure 13 shows the data and material flows in a seventh mode or method for use in producing printed sheets including advertising using the system of Figure 1; and
Figure 14 shows the data and material flows in an eighth mode or method for use in producing printed sheets including ordering free area advertising using the system of Figure 1.

### DETAILED DESCRIPTION OF EMBODIMENTS

Exemplary embodiments of the invention may be better understood with reference to the drawings, but these embodiments are not intended to be of a limiting nature. Like numbered elements in the same or different drawings perform equivalent functions.

A system and method for use in ordering and/or producing a paper product, which may be a corrugated cardboard or paper sheet for forming into a box, container or component thereof for packaging or shipping of an enclosed product is provided, where at least a portion of the sheet corresponding to a face or surface of the box is printed with images selected and ordered by a third party. Generally, the term " third party" is intended to describe a business entity or person different from the producer of the printed paper sheet, or the sheet to be formed into a box, container or component thereof (a "first party"), and the producer of the product to be shipped or stored in the box or container (a "second party"). In some instances, the third party may be part of or otherwise related to the second party entity and may be using the box for a first product to advertise a second product, a service, or the like. Although the term "third party" is used for convenience in the discussion, it is not the intention to require that three independent business entities be unrelated to each other. Different persons, departments, or the like may equivalently be represented.

In many shipping and storage uses of a box or container, the box or container is manufactured with printed matter, also called print work, or images on one or more surfaces of the box. Such material is specified by the producer of the products to be contained in the box, and in the case of regulatory information, the producer of the box or the sheet to be formed into the box. Boxes may have printing on some or all of the exterior surfaces; however, in some instances not all of the sides of the box are printed, or not all of the sides of the box need be printed. Such a circumstance may provide for one or more box surfaces whose printed content may be specified by a third party and be printed on the sheet from which the box is to be made, either at the same time as the second party printed material, or some other time.

The costs of manufacturing the box, printing the box and other costs may be defrayed by selling the unused space on the box for the display of third party printed matter as advertising. Herein, a system and method of identifying opportunities for the use of unused or available space ("free space" or "free area" or "blank area") of the surfaces of the box space, and facilitating the placement of orders for printing on such free space is disclosed.

In an aspect of the invention, the first party accepts orders for boxes from a second party. The specifications of the boxes ordered may include the size, configuration, liner material, color material, strength, and the like, and the second party, as the orderer of the boxes, specifies the printed matter or print work including without limitation images, pictures, photographs, text, data, and/or symbols, to be placed or printed on the various surfaces of the sheet to be formed into a box. To the extent that the second party wishes to participate in or authorize the use or sale of free space on boxes used for its products, one or more surfaces of the box are left blank, or the printing on one or more designated surfaces of the box are replaced by advertising printed matter or print work specified by a third party.

Systems and methods for use in ordering and/or producing the box from the first party by the second party are described in the applicant's related European applications filed on even date and having a priority date of April 20, 2006 as well as apparatus and method for producing the printed sheets to be formed into a box with a flexible printing process using ink jet technology disclosed in applicant's above mentioned EP 1 731 318 and EP 1 733 890. As a consequence of the ordering and production of printed sheets for boxes, the order data base of the first party (the box producer or manufacturer) may contain information about the type of product to be shipped or stored in the box, the size and configuration of the box, identification of the corporate entity of the first party, production and shipping schedule, quantity ordered, and the like. Some or all of this information may be useful to a third party in identifying advertising or promotional opportunities.

In an aspect of the invention, the third party space requirements may be entered into a data base of the first party. These needs may specify the type or category of product or services to be advertised, the time period during which the advertisement would be first available to the public, the number of boxes to be produced with the advertising print work or matter printed thereon or the total price or cost. As previously noted, the first party is the producer of the printed sheet or box, the second party is the user of the sheet or box and the third party is the entity or person purchasing or specifying the content of the available advertising free space on the box, and placing the order for such free space. A third party advertising requirements data base may then be compared with a multiplicity of orders placed by second parties to determine compatibility between the availability of space and the requirements of the third party. Where such compatibility exists, orders for use in printing on the available free space may be either automatically executed or the availability of free space communicated to the third party so that a decision on placing an order for printed matter or print work in the available free space may be made. Whether the space commitment is automatic or requires confirmation would be a customer preference specified in the second and third party information. As there is the possibility for commercial conflict or at least incompatibility in the placement of a third party advertisement on a box containing the product of a second party, the second party may require its acceptance of the advertisement prior to or as a condition for the first party's acceptance of the order from the third party.

In another aspect of the invention, some or all of the information in the order data base that is relevant to the purchasing of available advertising free space may be made searchable by a third party. In this circumstance, the third party may access the data base by specifying parameters on a web page search form, or using a specially designed display format, so as to initiate a data base search of the order data base to identify orders meeting search criteria. The data base search engine may be any of the variety of such engines as are known in the art and may be found in web-based access applications. For commercial security, only known users having a valid user name and password may be provided with access to the order data base, and the connection between the first party and the second party order data base may be made through a server and using encrypted connections as are known in the art.

Instructions for managing the data bases accessible to several parties, searching of the data bases, selection of advertising space, ordering of advertising free space and the manufacturing processes for producing the printed sheet for the box, and the like, may be provided on computer-readable storage media or memories, such as a cache, buffer, RAM, removable media, hard drive or other computer readable storage media, and executed by servers, computers or processors. The terms server, computer, processor and the like are used equivalently in the art and that practice is continued herein.

Computer readable storage media include various types of volatile and nonvolatile storage media. The functions, acts or tasks illustrated in the figures or described herein may be executed in response to one or more sets of instructions stored in or on computer readable storage media. The functions, acts or tasks are independent of the particular type of instruction set, storage media, processor or processing strategy and may be performed by software, hardware, integrated circuits, firmware, micro code and the like, operating alone or in combination. Likewise, data processing strategies may include multiprocessing, multitasking, parallel processing and the like. Instructions may be stored on a removable media device for reading by local or remote systems. The instructions may store in a remote location for transfer through a computer network, a local or wide area network or over telephone lines. Alternatively, the instructions may be stored within a given computer or system.

To support multiple users at geographically distributed locations, web-based applications and devices may be used. Where the term "web", "network" or "Internet" is used, the intent is to describe an Internet-working environment, which may include both local and wide area networks, where defined transmission protocols are used to facilitate communications between diverse, possibly geographically dispersed, entities. An example of such an environment is the World Wide Web (WWW) and the use of the TCP/IP data packet protocol, and the use of Ethernet or other hardware and software protocols for some of the data paths

In the examples, the third party may also be for example a division or other business entity or staff organization of the second party having a need to place printed matter on boxes to be used for storage or shipment of products being manufactured by the second party. The printed matter or print work may relate, for example, to other products produced by the second party, to services provided in conjunction with the product to be enclosed in the box, or to other products, to special sales programs, discounts, new product announcements and the like. Each of these requirements may have time periods where the announcement is premature, such as before the product to be advertised has been publicly announced, and other time periods where the announcement is stale or out of date. Such criteria may form the basis for the search fields, along with information on the type, size, configuration and construction of the box which may be relevant to a decision on the placement of an image on the side thereof having free space.

As used herein, the term "corrugated sheet" is intended to mean any structure having at least one liner and a corrugated core sheet or structure, the liner and the corrugated core structure being integral or co-joined by fixing means such as an adhesive, an interlayer, or the like. Such corrugated sheets are commonly made from cellulose-based materials, e.g., paper or cardboard, but as used herein the term is not intended to exclude other materials such as plastics, staple fibers, or other combinations of materials that may be formed into sheets. A corrugated sheet has a minimum of a liner and a corrugated core sheet or structure, but may include multiple layers of either type, with various fixing means for joining or securing the layers together.

The term "sheet" may be a corrugated sheet, a flat sheet or liner, a flat sheet or liner with a corrugated core sheet affixed to one surface, a corrugated core sheet having flat sheets or liners affixed to opposing surfaces thereof, or combinations of such arrangements. The corrugations or flutes may be sinusoidal, crenellated, triangular or the like. The sheet may be cellulose-based, plastic, fibrous or the like and may be a combination of a variety of materials such that a surface suitable for printing is formed.

Printed matter or print work comprises a printed image which may include without limitation a picture, a drawing, a geometric or abstract design, and/or text, and be of one or more colors, and may even consist of a single solid color. Printed matter or print work may include more than one image combined for printing on a surface of a sheet for use in forming a box or container or component thereof.

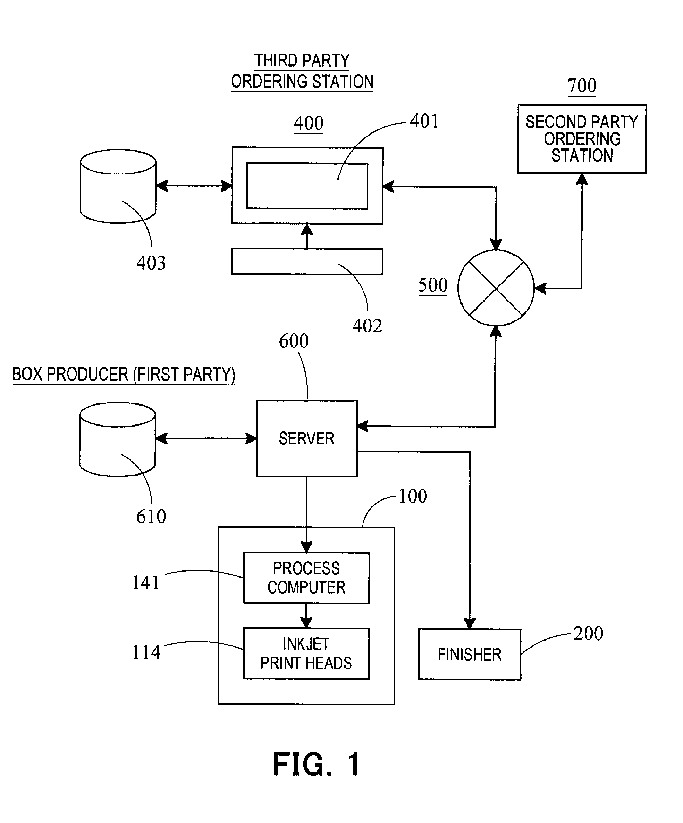

Figure 1 illustrates a portion of the system and method, comprising a third party ordering station, which may also be termed a client or user, having a computer 400, interfacing with a communications network 500, the communications network 500 interfacing with the producer through a server 600. The computer 400, for use by the client may further comprise a display and central processing unit 401, a keyboard 402 and a mass storage medium 403. The computer may be a personal computer, or any equivalent thereof, and have a range of accessories (not shown) including a mouse, auxiliary storage, displays, and the like. The interface between the computer 400 and the network 500 may be a wired or wireless connection. The network may be any of a local area network (LAN), an intranet, a wide area network (WAN) such as the Internet, or a wireless interconnection, or a combination of any or all of the types of communications networks, so as to serve as a data connection between the customer and the producer.

The second party or customer for the box, who may be a producer or distributor of the product to be stored and shipped in the box, may place an order for boxes through a second party ordering station 700, which has the same or similar capabilities as the third party ordering station which has been described. The second party places an order for boxes which may specify size, configuration, construction details, quantity, and delivery date, in addition to the specific matter which is to be printed on the surfaces of the box. In the situation where one or more sides of the box, or the interior thereof is to be made available to a third party (where the third party may be an activity or operation of the second party), such information as the location of the surfaces that are available, the type of product which will be contained in the box, the projected shipping date of the assembled box and product, acceptable types of third party print work or printed matter, and the like may also be supplied. All or a subset of the information provided by the second party may be made available to the third party through an automated or interactive search of the second party order data base. The selection of the categories of information, an d the detail of the information to be provided regarding the order may be altered for third parties not associated with the second party. In addition, the access by a third party to the data base of orders maintained by the first party or producer may be on a read-only basis.

At the producer location, a server or computer 600 has an interface to the network 500 and executes a compatible software protocol to establish and maintain communications with the client or user, which may be a second or a third party. A mass storage device 610, which may be any of the known types of memory, is connected to the server 600. The mass storage device may contain the data bases needed to perform the functions described herein, which may include the second party order data base for the boxes, a subset data base of the second party order data base which is accessible to third parties, a third party data base which may contain information as to specific needs of the third party for material to be printed on first party boxes, and a third party data base which contains orders for the printing of material on second party boxes. This may permit third-party specified advertising requirements to be compared with available space in the order data base on a requested or periodic basis in order to determine if the requirements can be fulfilled.

The term "data base" does not imply that the data may not be stored in a composite data base where individual fields have specified access restrictions, the merging of data bases, the querying of multiple data bases, and the like. The term "data base" is convenient for purposes of discussion of some functional aspects as may be perceived by a person, but is not intended to suggest a limitation on the way in which the actual data is stored and processed.

The server 600 further interfaces with an ink jet printer 100, the ink jet printer having a print controller 141. A control signal is transmitted from the server 600 to the ink jet printer 100. This may include the conversion of red (R), green (G), blue (B) data representations normally used to display images on a visual display such as a computer monitor to the yellow (Y), magenta (M), cyan(C) and black (K) format which may be used for printing. Alternatively, the representations may be converted in the process computer or print controller 141. A finisher 200, which may be comprised of a creaser and a slotter may be connected to the server 600. Alternatively the server may display or print instructions for operators regarding the operation of the finisher 200, and the steps needed to perform the setup and the operation of the finisher may be performed either manually or automatically.

In an aspect of the invention, the entire printed image or print work including the image specified by the second party and the image for the free area specified by the third party may be printed on the sheet in one printing operation, or the image specified by the third party is printed on the free area of the sheet on which the image specified by the second party has already been printed.

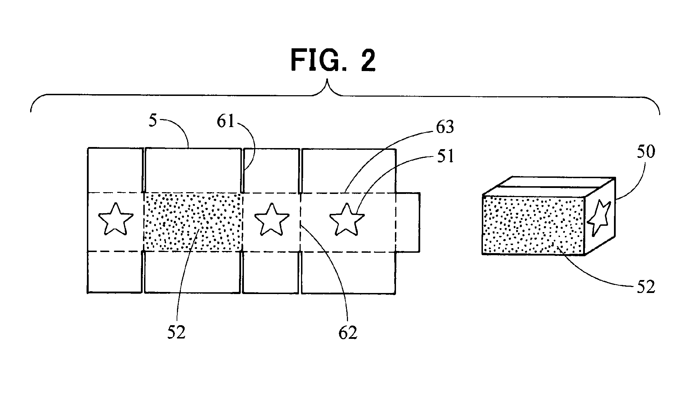

Figure 2 is an example of a box whose characteristics are maintained in the first party order data base, showing a box having three sides where the printing has been specified by the second party as the user of the box, and represented schematically by stars 51, and a side (stipled) where the second party may permit a printed message or image to be inserted by a third party shown as a lined area 52. For example, in a case where the products to be shipped by the box are apples produced by the second party, stars 51 may represent an image of the apple, while the printed message for the free area 52 may be related to an apple jam produced by the third party. The box is shown both in the form of the sheet 5 that will be produced by the first party, including slots 61, creases 62 and scores 63, as well as a perspective view of a complete assembled box 50.

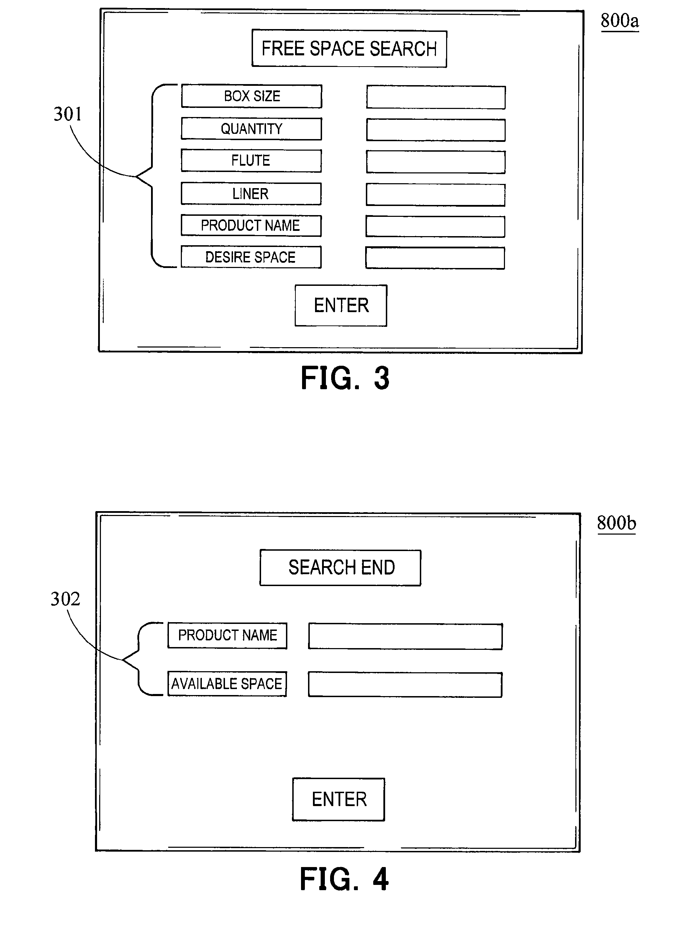

Figure 3 is an example of a computer monitor screen 800a which may be used by the third party to access or query the order data base to determine whether suitable space is available. This query may be performed by manually entering the information on the screen, or by storing space requirement information in a third party data base on the mass storage medium 610 so that the query may be run multiple times until either the time period specified by the third party has expired or the space requirement is fulfilled. In the examples presented, a manually controlled search is described, but an automatic search performing at least the functions described is equally possible.

The third party ordering station display or screen 401 may have a variety of different and customizable search field inputs which may be specific to the needs of the third party. Only a sample of such search fields are shown herein, and which may include box size, quantity, characteristics such as flute or corrugation and liner, product type, amount of space desired and time period of availability. Other search criteria have been mentioned in this specification, and the choice of such criteria may depend on the users, the industry of the products, and the like. The search may be initiated by clicking on an enter button, pressing the enter key or return key on the keyboard 402, or any similarly acting input device or method. The search request is sent from the ordering station 400 to the server 600 over a network 500, which may be the Internet, a LAN, a WAN, a wireless connection or the like, so that the ordering station 400 and the server 600 may not be co-located.

Upon receipt of the search request, the server 600 performs the functions of searching the appropriate data bases stored on mass storage medium 610 and formats the results of the search for transmission over the network 500 to be displayed at the ordering station 400 on the display 401.

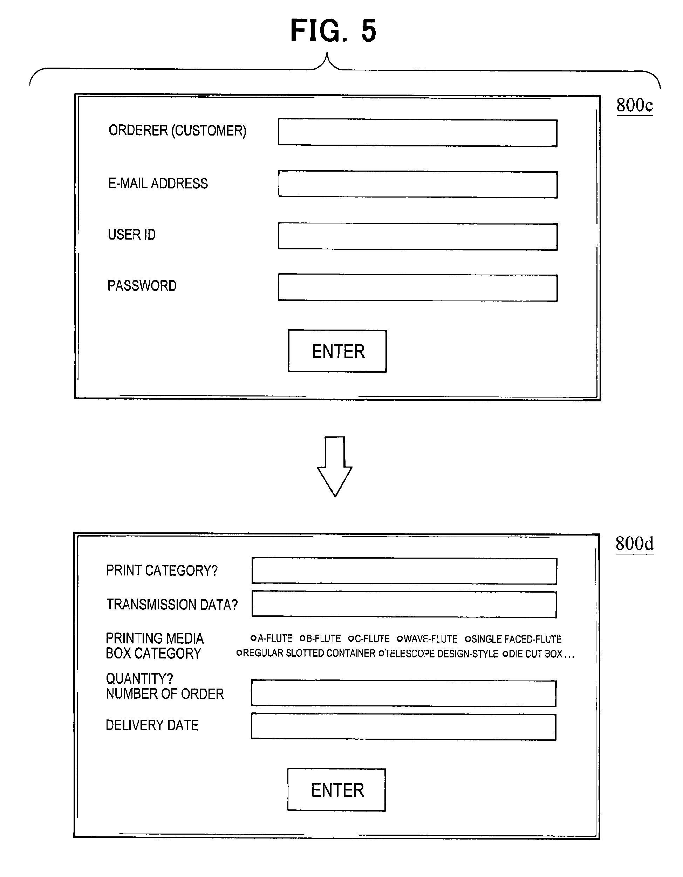

Where the search returns one or more second party orders which are suitable for the purposes of the third party and which may be displayed on a search results screen 800b, as shown in Figure 4, an order may be placed for the printing on the free space 52. In placing such an order, it may be required that the third party user access a log-in screen 800c as shown in the upper part of Figure 5, where such identifying information as customer number, user ID and password are required. Such information is then sent over the network to be validated by the server 600, and an ordering screen having ordering information 800d presented to the user. All of the information may be entered manually, however as the results of the search may have presented much of the information needed to complete the ordering process, such information may be entered automatically on the form, subject to validation or change by the user.

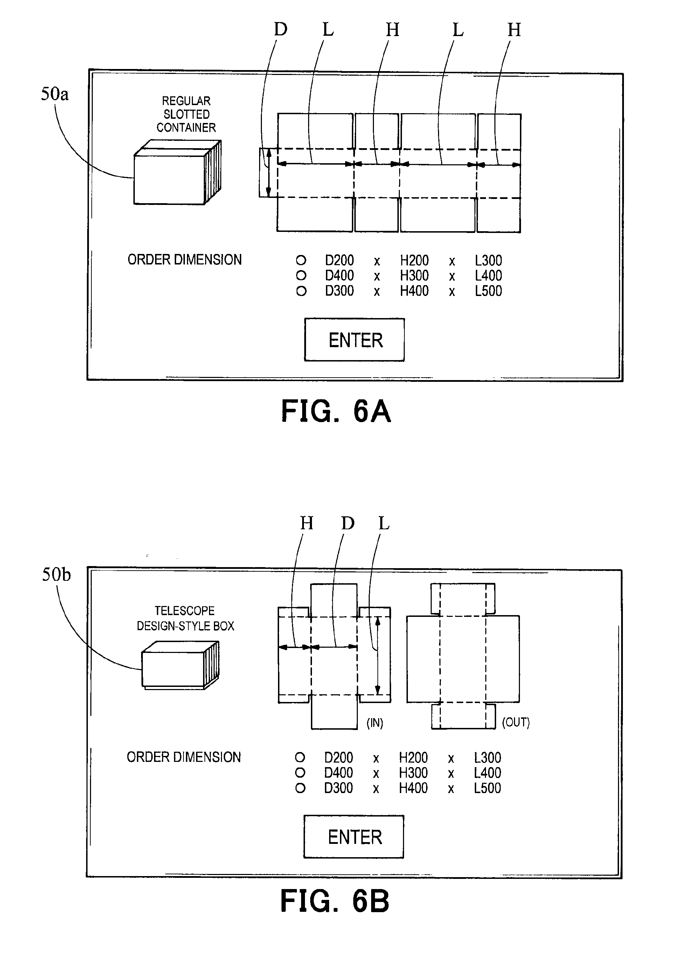

As part of the search and decision making or selection process, the ordering station 400 may display representations of the sheet and box type available, and may also indicate the surface of the box where third-party-ordered print work may be placed. Figure 6A shows a developed outline image of a regular slotted storage container 50a where the available dimensions are indicated in association with the laid-out printed sheet for forming the box. Similarly, a telescope design or two-part style box 50b is shown in Figure 6B. In this example, the box is produced in two pieces or components, where one component, the cover of the box is sized and dimensioned to fit over the remainder or body of the box to form a top closure. Other box styles may be similarly displayed so that the user may visualize the configuration, however, the user may order the print work in the selected free area without the need to display an image such as the developed outline image.

A method for use in producing printed sheets and/or for use in accepting orders for printing on a free area or space of a box or shipping container to be fabricated from the sheet includes: establishing and maintaining a data base of second party orders for boxes, including at least the identification of one or more free areas of the box which may be available for printing of information or images specified by a third party; accepting requests from a third party seeking to order the printing of images on free areas of second party boxes; searching the data base of second party orders so as to identify second party orders meeting third party ordering criteria; and transmitting to the third party the information relating to available free areas meeting search criteria; and receiving an order for printing from the third party.

A method for use in ordering and/or producing printed sheets including third party supplied information or images, or third party print work, on a free area of a shipping container ordered by a second party includes: formulating a third party search request incorporating ordering criteria, which may include but is not limited to: type of box, quantity of boxes, shipping date, and the like; forwarding the third party search request to a first party capable of providing the service of searching box orders for available free area meeting third party search criteria; receiving search results indicating the second party orders having free areas meeting third party search criteria; displaying the search results; selecting a search result meeting third-party requirements; and placing the order by validating, modifying or filling out an order form of the display.

The subsequent steps of the manufacturing process may be performed automatically, manually, or by a combination of automatic and manual steps.

In each of the methods, at least one of the steps of initiating the searching, the selecting second party orders for which a third party order for free space is to be associated, and the third party order placement, may be performed automatically. Further, here, as in the discussion of the system, there may be more that one first party, second party and third party. The first party may be an intermediary between the box printer (as the first party producer) and the second and third party. The intermediary may be an advertising agency or advertising sales bureau, which may offer the free space on boxes of more than one box printer (first party) and product manufacturer (second party) to third parties.

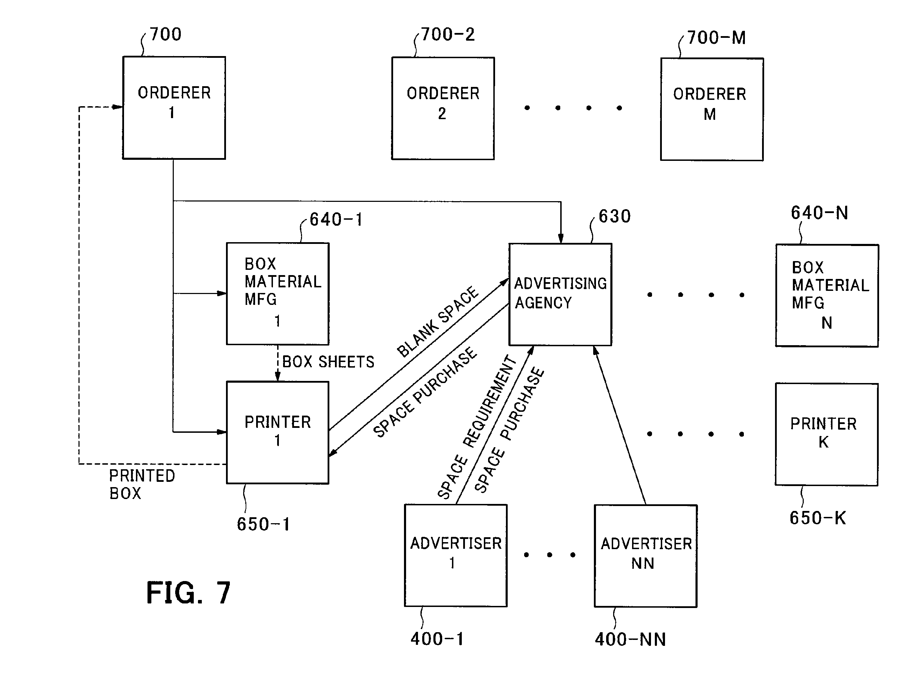

In an aspect of the invention, the system of Figure 1 may be used in a distributed fashion by a multiplicity of parties having attributes of being orderers of boxes, or materials, such as sheets, for boxes, producers of the boxes or materials for boxes, printers having the capability to produce bulk printing, short run printing, or both, advertising agencies, and advertisers. As shown in Figure 7, the second party 700 may correspond to a producer or distributor of a product requiring a box to protect and store the product during shipment and desiring to sell, or have sold, blank areas on the box to third parties, for compatible advertising material. The third party advertiser 400 may be a plurality of individual entities, each having distinct and independent needs for advertising that may be printed on boxes having available blank space. The first party 600 which is the box producer or manufacturer may include a plurality of entities performing functions needed to satisfy the requirements of the plurality of second parties 700 and the plurality of the third parties 400.

The first party 600 may include a manufacturer or producer of box materials 640, such as corrugated sheets, a printer for printing 650 the box material with information and images supplied by at least one of second party 700 or the third party 400, and an advertising agency 630 which may serve as an intermediary between the entities comprising the first party 600, and the second and third parties. The printer entity 650 may be more than one type of printer. That is, a printing entity may specialize in bulk printing using rotary presses, or the like, or may specialize in short-run printing using, for example, an ink jet printer. Some printers 650 may have the capability to perform both types of printing.

The term "rotary press" may be used to represent an entity having a capability to print large quantities of sheets with the same image and data, and the term "ink jet printer" may be used to represent an entity having a capability to print sheets with images which may be changed from sheet to sheet, or at least be economically done in small quantities. The term rotary press may, for example, represent the actual printing press, the functional capability of the printing machine, or the business of the entity.

Figure 7 illustrates a first example of a configuration of entities engaged in the production, configuration and use of printed materials, which may be the cardboard sheets for forming a box. Here, there are a multiplicity of users placing orders for cardboard boxes, a plurality of box manufacturers producing the cardboard sheets in accordance with the specifications selected by the orderer, a printer to produce printed matter or print work such as printed information and images on at least a portion of the visible surface of the box to be formed from the sheet, an advertising agency serving as an intermediary between an advertiser and the remainder of the entities. Solid arrows between entities indicate data, information or image flow. Generally information flow between entities is bi-directional, however, the arrow head shows the flow needed to provide the information needed for the principal functions to be performed. Dashed arrows between entities indicates the flow of material such as a cardboard sheet.

A user or orderer 700-1, which may be an entity producing the product to be shipped in the box, places an order for boxes with a box manufacturer 640-1, which may be one of a plurality of box producers or manufacturers 640. Placement of the order with a particular box manufacturer may be as a result of commercial considerations such as price, delivery, quality and the like. The information furnished by the user 700-1 may include box type and material specifications, box dimensions, quantity and delivery. The user 700-1 may select a printer 650-1 from a plurality of printers 650, and place an order for printing the boxes ordered from the box manufacturer 640-1 with a printer 650-1, which be selected using similar commercial criteria as used to select a box manufacturer. Information furnished to the printer 650-1 may include the information and images to be printed on the box, the surfaces to be printed, and any surfaces that are blank, and which may be available for advertising by an advertiser 400.

Information on the availability of free areas or blank areas 52, including the quantity, size, and projected utilization date, and the contents of the box when used to ship or store the user product may be furnished by the printer 650-1 to an advertising agency 630, which may be a separate entity, or be a functional aspect of the printer 650-1. Here, the advertising agency 630 is shown to be an independent entity and is in communication with a plurality of printer entities 640. For example, printers 650 may cooperate with advertising agency 630 by sending information available to each of the printers 650 based on orders and information received from a plurality of unrelated orderers 700-1, 700-2...700-M.

An advertising agency 630 may manage a data base of information received from the plurality of printers 650 so as to maintain current information on the availability and characteristics of free space or blank space available for print work, in practice the printing of advertising or promotional material or the like. This data base of available blank space may be searched by the advertising agency 630 based on requests from one or more advertisers 400-1...400-NN. Alternatively, the advertisers may be permitted to search the data base of the advertising agency 630, depending on the business practice of the advertising agency 630, and taking account of any restrictions on access placed on the information by the printer or the orderer. Such access may be password protected, and may be limited to a subset of the information in the data base, including a subset of the information related to each orderer 700-1, 700-2....700-M.

Based on the searching of the data base of the advertising agency 630, one or more advertisers 400 may place orders with the advertising agency 630 for information and images to be printed on the free areas or blank areas 52 of the printed sheets being produced for boxes by the printers 650. Such orders are sent to the printer 650 producing the specific order for which the blank space has been purchased. The various exchanges of formal paperwork or data between the parties for accepting an order, billing, and confirming shipment and receipt, as well as other commercial aspects of the transaction that have not been described, are not specific to the transaction types being described herein, and are known to persons of skill in the art.

When the printer 650-1 receives an order from the advertising agency for printing on free areas or blank spaces in one of the orders received from an orderer 700-1, the information and images are linked to the order from the orderer 700-1. When the boxes associated with the order are received from the box manufacturer 640-1, the printing job may be scheduled by the printer 650-1, and the printed box sheets or assembled boxes sent to the orderer 700-1 that had placed the order. Depending on the printing modality being used, the bulk printing of images may be performed by a rotary press or an ink jet printer, or the like, and the printed sheets with blank space or free areas remaining may be moved to temporary storage or to the next printing process, which may be a short-run printing process using an ink jet printer, or the like.

The term "short run" is not intended to restrict the number of sheets being printed to less than the total number of sheets in the order, although this may occur. Rather, "short run" indicates that the printed matter or print work, that is, the image or information being printed may have the characteristic that the type of printing modality used permits the image to be changed relatively frequently and even from sheet to sheet. However, the print work, that is, the image and information is produced in accordance for the order for printing on the blank area, and may be of the quantity specified in the order for printing on the blank sheet, which may be less than or equal to the total quantity of sheets printed.

The orderer 700-1, the advertising agency 630, the box manufacturer 640-1, the printer 650-1, and the purchaser of blank space 400-1 may have specific business relationships with each other, such as being part of the same economic group, or be independent of each other, and select each other as suppliers on an "arms-length" basis determined only by convenience and economic factors. As such, a variety of configurations of the entities and data and material flows are possible.

Several variations of the configuration of Figure 7 are discussed, but these are not intended to limit the relationships between the parties, or to suggest that the information and material flow is limited to the paths and information specifically described. Generally, at least one of the functional parties is at a separate location from the others, and information is transferred by a variety of means, which include local area networks, or wide area networks, which may include the Internet. Other forms of information transfer may be used including writing the material to a non-volatile media such as a CD-ROM, DVD, flash memory, or the like, or using audio or written communication for a part of the transaction. Electronic transfer of data for the transaction may be limited by the facilities at each of the participants.

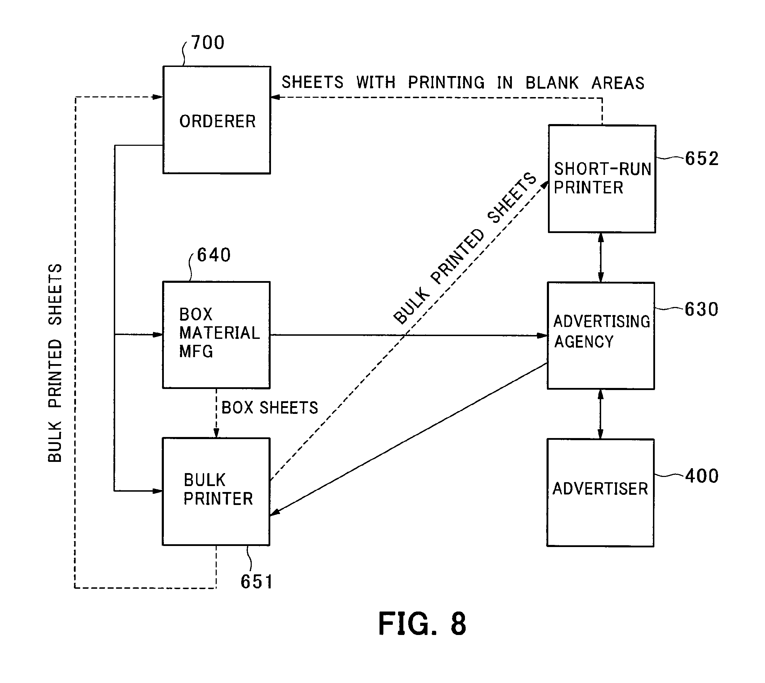

Figure 8 shows a configuration, data and material flow where the advertising agency 630 also performs the short-run printing. In this example, the orderer 700 places an order for boxes with a box manufacturer 640, and an order for bulk printing with a printer 651, where the printer 651 is a printer 650 having a rotary or similar press which may be used for bulk production having the same information or images to be printed on the sheets being ordered. The box manufacturer 640 delivers the sheets to be printed to the printer 651. The printer 651 makes the availability of blank spaces on boxes known to the advertising agency 630. The information provided may include information on the type of product that will be on the box, the type of advertising that may be suitable for the free area or blank area, and the like. The advertising agency 630 includes the information from the printer 651 in a data base indicating availability, and the space may be purchased by any of the methods previously described. The quantity of printed sheets purchased by the advertising agency 630 from the printer 651 are shipped from the printer 651 to the advertising agency 630, and the advertising agency may have a printer 652, which is a short-run printer such as an ink jet printer which may be used to print the advertising material on the blank surface of the box sheet. The printer 652 may be a part of the advertising agency, or may be a separate entity. Once the box sheets have been printed by the short-run printer 652, they are shipped to the orderer 700, completing at least part of the order.

When the amount of advertising purchased by the advertising agency 630 does not cover the entirety of the order placed by the orderer 700, the residual sheets may be shipped directly from the printer 651 to the orderer 700. Alternatively, the printer 651 may adjust or update the data base relating to the remaining number of sheets having free area or blank space available for the order and make that adjusted or updated data available to one or more advertising agencies 630. This process may be repeated until such time as the order has to be produced or shipped, or all of the free area or blank space for the order has been allocated to advertisers. In this way a plurality of advertisers may place advertisements on portions of each order of boxes. Since the bulk printer 651 is configured to print a large quantity of boxes with the same information, the short-run printer 652 which may be associated with the advertising agency 630, may represent a method of matching the advertiser quantity needs and availability time with the available blank space.

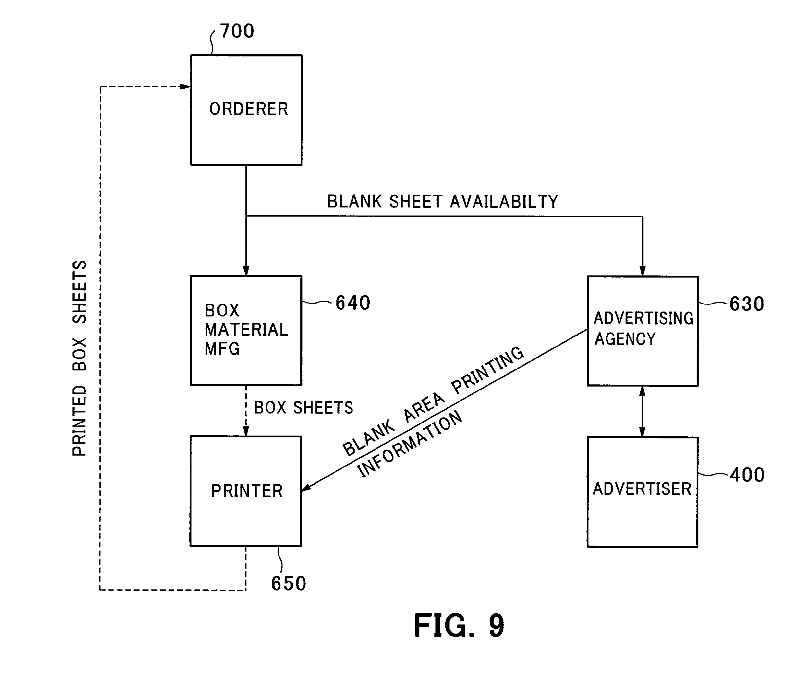

In another example of the invention, shown in Figure 9, the advertising agency 630 is responsible for choosing the printer 650, which may be a single printer, or a combination of a bulk printer 651 and a short-run printer (not shown). The orderer 700 places an order for sheet material with a manufacturer 640 of sheet material for the type, size and quantity of sheet material needed. An order for the printing is placed with the advertising agency 630, including the quantity to be printed and other related information, has previously described. As such, the information provided to the advertising agency 630 by the orderer 700 now includes information that may have been provided to the advertising agency 630, in previous examples, by the printer 650 and the orderer 700.

The advertising agency 630 may now choose a printer 650 based on commercial considerations and place an order for printing. At the time of placement of the order with the printer 650, the advertising agency may include information only regarding the bulk printing, or the bulk printing and any printing that has been placed by the advertising agency 630 for printing on the free areas or blank areas identified by the orderer 700. In this manner, the advertising for the free areas or blank areas of the printed sheet may not be committed when the bulk printing order is placed. The information to be printed on the blank areas may be consolidated and sent to the printer 650 at one time, or released in smaller quantities. Alternatively, the short-run printing may be performed by another printer and the information to be printed sent to the short-run printer in either a consolidated form or incrementally.

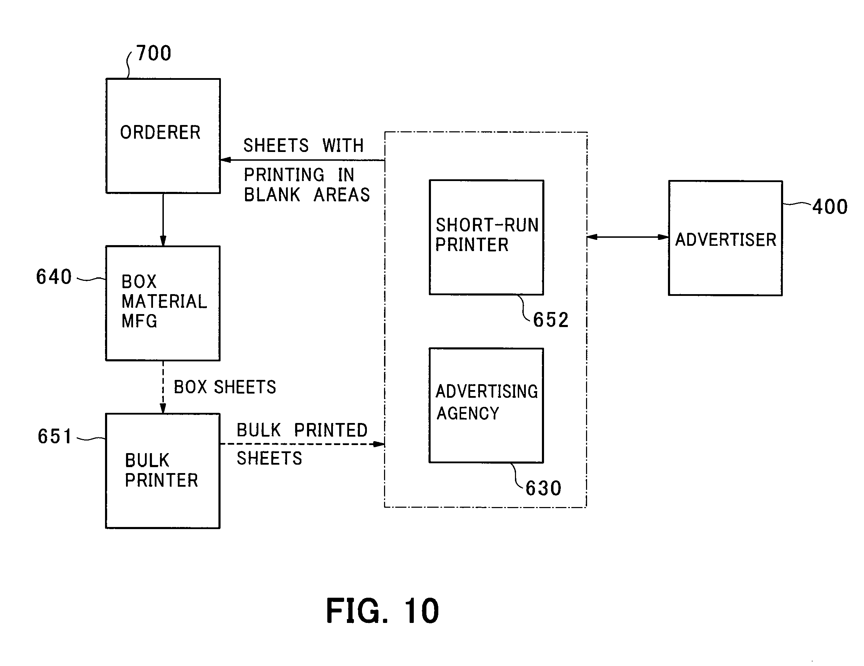

In another aspect of the invention, Figure 10 shows a relationship where the orderer 700 provides separate orders to the box manufacturer 640 and the bulk printer 651, and also sends information to the advertising agency 630, for inclusion in a data base of available blank space for sale to advertisers 400. The material flow is from the box sheet manufacturer 640 to the bulk printer 651, where the printing ordered by the orderer 700 is performed. The bulk printed sheets are sent to the short-run printer, which may be a part of the advertising agency 630 or a separate short-run printer. The short-run printer 652 may print the advertising information provided by the advertising agency 630 in the blank areas of the box sheets may send the completed sheets to the orderer 700. The process for identifying the free areas or blank areas on the sheet material, interacting with potential advertisers to sell the space, and the management of the printers is similar to that previously described.

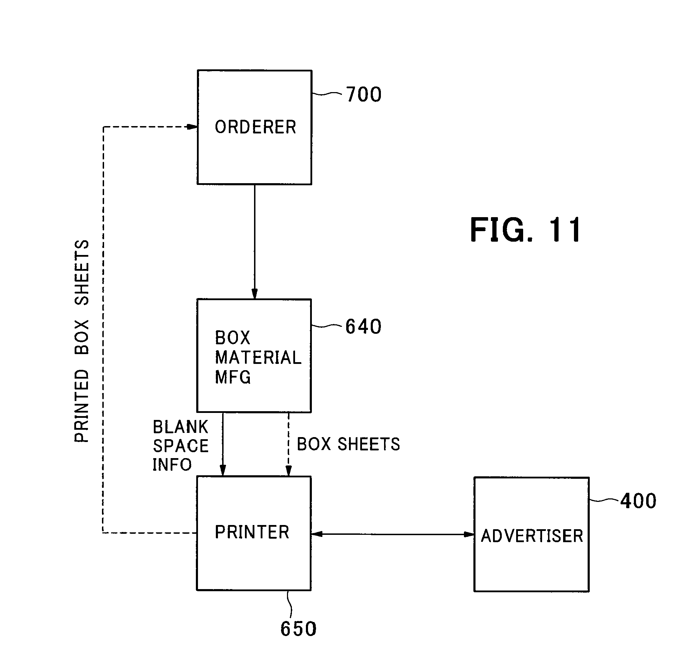

In yet another aspect of the invention, Figure 11 shows a relationship where the orderer 700 places the order for the box sheets with a box manufacturer 640 and, in addition to the information needed to produce the sheets, the bulk printing requirements, including the identification of the blank spaces available to advertisers 400 are provided. The box manufacturer 640 may select a printer 650, having the capability for bulk printing and short-run printing or separate printers having specific capabilities, and provide the printing information to the printers selected. The information may be provided at any time prior to the printing of the sheets, and may be provided in advance of shipment of the box sheets. Potential advertisers make space needs available to the printer 650, and the printer 650 matches the space requirements of the advertisers 400 with the space available. The advertisers 400 may place orders for advertising material to be printed on the free areas or blank areas offered by the printer 650, and the printing scheduled to accommodate the receipt of the box sheets from the box manufacturer 640 and the overall delivery schedule. Advertising may be sold for printing contemporaneously with the bulk printing, or the bulk printed sheet may be delivered to the orderer 700 as required, and with advertising printed on the blank areas, providing that that the printer has sold the advertising space. Incremental printing of batches of an order and incremental shipping of box sheets by the box manufacturer 640 to the printer 650 may accommodate "just-in-time" operations, so that the amount of material in storage between the various process is either minimized, or adapted to the economics of each of the manufacturing or printing processes.

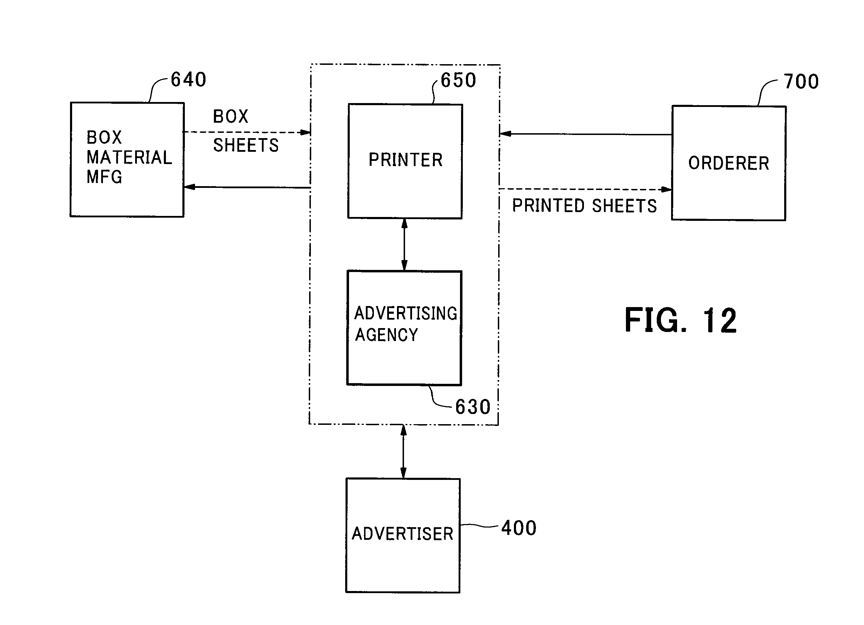

In yet another aspect of the invention, shown in Figure 12, the printer 650 also acts as an advertising agency 630. The orderer 700 places an order for a printed sheet for use in fabricating a box, the order including free area or blank space information, the information and images to be printed on the sheet, blank space identification, and specifications for the sheet. The printer may order the sheet from a corrugated box manufacturer 640, and place the information on availability of free space or blank space in a data base of an advertising agency 630 associated with the printer 650. The advertising agency 630 may distribute or otherwise make available the information regarding blank space availability to an advertiser 400. The advertiser 400 may be a plurality of independent entities, as in the previous examples. When the order is scheduled to be printed by the printer 650, the order may be bulk printed and short-run printed in accordance with the procedures of the printer 650, and shipped to the orderer 700.

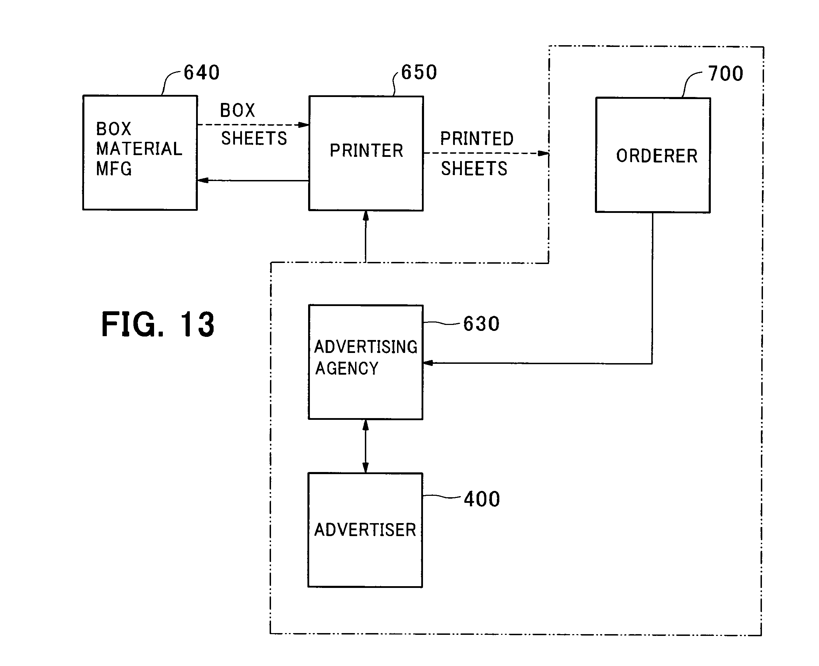

In still another aspect of the invention, shown in Figure 13, the advertising agency 630 may be associated with the orderer 700. This may occur, for example, in a enterprise with several divisions or associated companies where the products of one business of the organization may be advertised on boxes being used to ship products of another of the businesses of the organization. Here, the orderer 700, the advertising agency 630 and the advertiser 400 may be functional aspects of a business. There may be a number of business entities that perform the function of advertisers in this model. An advertising agency of this type may be known as an "in-house" or captive agency. Such a model may be used to allocate the costs of advertising to the portion of the business placing the advertisement for printing on blank spaces. The advertising agency 630 may place the order for printed box sheets with a printer 650 and the printer may order suitable sheet material from a corrugated sheet manufacturer 640. The ordered sheets may be delivered to the printer 650, printed, and then delivered to the orderer 700.

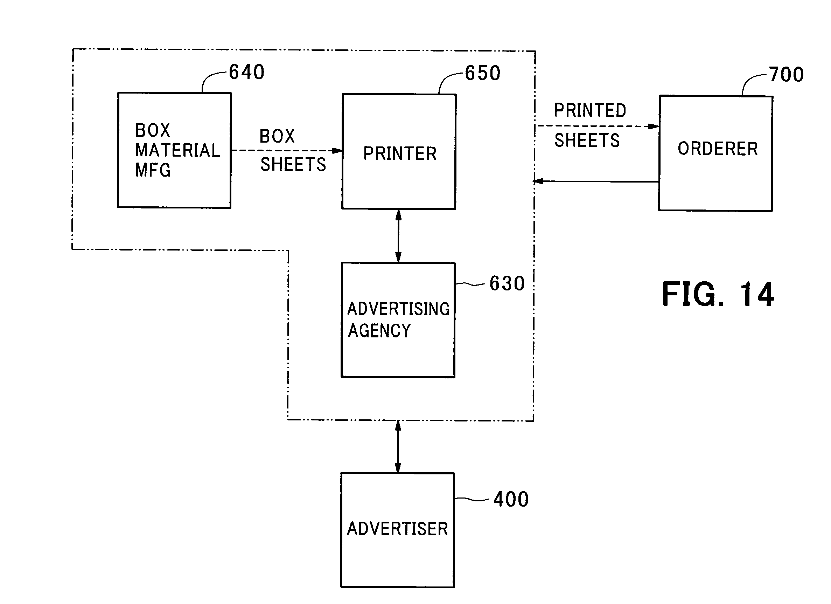

In a further aspect of the invention, shown in Figure 14, the functions of the printer 650, box manufacturer 640 and advertising agency 630 may be associated with the same organization, business entity, or associated business entities. An order is placed with the printer 650 by the orderer 700. The requirements are distributed to the box manufacturer entity 640 and the advertising agency entity 630. The advertising agency entity 630 undertakes to sell free area or blank space that has been identified by the orderer 700 by interacting with a plurality of potential advertisers 400 by identifying the available free area or blank space and the parameters affecting the availability of the space to the advertisers 400. The various criteria for selecting space and selling the space have previously been described.

When space has been sold by the advertising agency 630, the information is provided to the printer 650 so as to be merged with the data file representing the order and to permit the use of the free area or blank space on the sheets of the order for printing the allocated advertising material. In this regard, the sequence of printing, and whether the whole order is printed at once or piecemeal, is subject to the same methodology as has previously been described.

While the methods disclosed herein have been described and shown with reference to particular steps performed in a particular order, it will be understood that these steps may be combined, sub-divided, or reordered to from an equivalent method without departing from the teachings of the present invention. Accordingly, unless specifically required herein, the order and grouping of steps is not a limitation of the present invention.

Although only a few exemplary embodiments have been described in detail above, those skilled in the art will readily appreciate that many modifications are possible in the exemplary embodiments without materially departing from the novel teachings and advantages of the invention. Accordingly, all such modifications are intended to be included within the scope of this invention as defined in the following claims.

## Claims

1. A system for producing a printed sheet, such as a printed sheet for forming a box or container or component thereof, comprising:
a computer configured to access a first data base of second party orders for second party specified print areas on the sheet and also including a free area on the sheet specified in the second party orders, the first data base being stored on a computer readable medium;
wherein the computer has a communications interface for receiving third-party-specified requirements for third party advertising on the free areas of the sheet, and the first data base is searchable to determine the specific second party orders meeting the third-party-specified requirements

2. A system according to claim 1, **characterized in that** a second data base is stored on the computer readable medium, the second data base containing third-party-specified requirements for free space as received through a communications interface, and the second data base is searchable to determine the third-party-specified requirements meeting the second party specified free area.

3. A system according to claim 2, **characterized in that** the first data base is searchable based on the criteria of the second data base.

4. A system of any one of the preceding claims, **characterized in that** search results of the first data base are transmittable over a communications interface.

5. A system according to any one of the preceding claims, **characterized in that** the printed sheet is configured to form a box, container or component thereof.

6. A system according to any one of the preceding claims, **characterized in that** the computer is configured to initiate operation of an ink jet printer to print the third party advertising in the free area on the sheet and/or the second party print order in the specified print areas on the sheet.

7. A system according to any one of the preceding claims, **characterized in that** the computer is configured to process a third party order based on search results of the first and/or second data bases, and to modify a production data base corresponding to the second party order data base for printing in second party printing areas of the sheet to include a third party order for printing in the free area of the second party order.

8. A method for use in printing on a sheet, such as a sheet configured for forming a box or container or component thereof, the method comprising:
providing a first data base of print orders from a second party including data relative to print areas for accommodating the print orders from the second party and available free areas for third party advertising print orders;
searching the first data base using characteristic criteria supplied by a third party over a communications interface;
transmitting search results for printing orders in the first data base meeting the supplied characteristic criteria;
transmitting the acceptance of a third party order for printing on a selected free area of the sheet meeting supplied characteristic data for one or more of the second party orders in the first data base; and
programming the printing of the second party and/or third party print orders on the sheet.

9. A method according to claim 8, **characterized in that** the sheet is configured to form a box, container or component thereof.

10. A method according to claim 8 or 9, **characterized in that** it further comprises formatting in a computer and storing on a computer readable medium information received from the third party as an order, validating the order, scheduling the production of the order, and providing an acknowledgement of the order to the third party by transmitting an acknowledgement message over the network through the communications interface.

11. A method according to any one of the preceding claims, **characterized in that** the communications interface communicates with a network.

12. A method according to claim 11, **characterized in that** an image or message is displayed corresponding to the selected free area(s) to be printed.

13. A method according to any one of claims 8 to 12, **characterized in that** the data regarding available free areas is displayed in the form of developed outline images of a box, container or component thereof.

14. A method according to claim 13, **characterized in that** it further comprises modulating the data on a carrier wave and transmitting the carrier wave on a network.

15. A method according to claim 13 or 14, **characterized in that** the individual faces of the developed box outline image are displayed as separate images of individual faces of the box.

16. A method according to any one of claims 8 to 15, **characterized by** providing in the first data base or another data base information representing a type of product to be contained in the box, and one or more acceptable categories of third party advertisements, and/or one or more unacceptable categories of third party advertisements.

17. A method according to claim 15 or 16, **characterized in that** a data base is provided including pricing information for the manufacture and/or printing of the second party order including deduction information for second party compensation for third party use of the free areas.

18. A method according to claim 16 or 17, **characterized by** providing access to the information in the first or other data base to a qualified fourth party advertising agency

19. A method according to claim 17 or 18, **characterized in that** the free area is a portion of a side of the box, container or component thereof.

20. A method according to any one of claims 8 to 21, **characterized in that** the first data base is updated upon acceptance of third party order.

21. A method according to any one for claims 8 to 20, **characterized in that** the print orders are selectively executed by bulk printing and by short-run printing.

22. A method according to claim 21, **characterized in that** bulk printing is carried out by rotary press printing.

23. A method according to claim 21 or 22, **characterized in that** short-run printing is carried out by ink jet printing.

24. A method according to claim 23, **characterized in that** the advertising print order for printing selected free areas is carried out by ink jet printing.

25. A method according to any of claims 21 to 24, **characterized in that** the short-run printing is carried out off-line after bulk printing.

26. A method according to any one of claims 8 to 25, **characterized in that** the first data base is maintained on a machine-readable medium and is managed by a computer configured to manage the data base.

27. A method according to any one of claims 8 to 26, **characterized in that** the first data base or another data base includes data relative to the size of free areas, and at least one of the following:
a location for the free areas on a box, container or component thereof fabricated using the printed sheets;
a quantity of sheets having the free areas;
a description of the type of product to be contained in a box, container or component thereof fabricated using the printed sheets;
a description of at least one of a type of product or service that is available for advertising in the free areas, or a type of product which is not available for advertising in the free areas;
an accessibility date when a box, container or component thereof fabricated from the sheets is expected to be publicly viewable;
specifications of a box, container or component thereof fabricated from the sheets, including at least one of a type, a size, external sheet color and ink characteristics, or sheet color and ink characteristics; and
a price for printing the third party orders in the free areas.

28. A method according to any one of claims 8 to 27, **characterized in that** the printed sheets are designed for formation into a box, container or component thereof for containing a given product, the free areas on the sheets being available for advertising other products or services.

29. A method according to any one of claims 8 to 28, **characterized in that** information relative to selected free areas on sheets to be printed and advertising content of advertising print orders for a third party is transmitted to a printer.

30. A method according to any one of claims 8 to 29, **characterized in that** information relative to the availability of free areas on sheets to be printed is transmitted to a printer.

31. A method according to any one of claims 8 to 30, **characterized in that** information relative to available free areas on the sheets is transmitted to at least one advertising agency, printer, and/or a box manufacturer.

32. A method according to any one of claims 8 to 31, **characterized in that** the first data base is updated based on second and third party orders.
